# EUROPEAN PATENT SPECIFICATION

(11) **EP 2 773 247 B1**
(45) Date of publication and mention of the grant of the patent: **27.07.2016**
(21) Application number: 12783201.2
(22) Date of filing: 02.11.2012
(51) Int. Cl.: A47J 31/40

(54) **DEVICE AND METHOD FOR PREPARING A FLUID COMPOSITION FOR COMPLETE OR SUPPLEMENTAL ENTERAL NUTRITION**
VORRICHTUNG UND VERFAHREN ZUR HERSTELLUNG EINER FLÜSSIGKEITSZUSAMMENSETZUNG ZUR ENTERALEN ERNÄHRUNG
DISPOSITIF ET PROCÉDÉ DE PRÉPARATION D'UNE COMPOSITION FLUIDE POUR NUTRITION ENTÉRALE

(30) Priority: 02.11.2011 US 201161554551 P; 02.11.2011 EP 11187544
(43) Date of publication of application: 10.09.2014
(73) Proprietor: Fresenius Kabi Deutschland GmbH, 61352 Bad Homburg (DE)
(72) Inventor: BRITO-DE LA FUENTE, Edmundo, 61381 Friedrichsdorf (DE); ASCANIO, Gabriel, 14370 Hacienda San Juan, DF Mexico (MX); MAINOU-SIERRA, José Maria, 61239 Ober-Moerlen (DE); COLBUS, Heike, 61440 Oberursel (DE); MARTÍNEZ GONZÁLEZ, Egon Alejandro, 8940575 San Joaquín Santiago (CL)
(74) Representative: Fresenius Kabi Deutschland GmbH
(86) International application number: PCT/EP2012/071760
(87) International publication number: WO 2013/064663

(56) References cited:
- EP-A1- 1 541 222
- EP-A1- 1 857 027
- EP-A2- 0 201 927
- EP-A2- 1 589 500
- WO-A1-03/094624
- WO-A1-2006/136329
- WO-A1-2008/126037
- GB-A- 2 137 520
- JP-A- 2004 227 437
- US-A- 6 000 840
- US-A1- 2003 234 261
- US-A1- 2010 139 493

## Description

### Field of the invention

The invention relates to a device for preparing a fluid composition for enteral nutrition, i.e. a fluid composition for complete or supplemental enteral nutrition and a method for preparing a fluid composition for enteral nutrition.

### Background of the invention

In today's time, malnutrition is an under-recognized and under-treated problem that many countries are facing - including the so-called developed countries - to the detriment and costs of health and social services, individuals and society as a whole. Recent estimations for the European Community indicate that, within the European Community, as many as 20 million individuals are at risk of malnutrition and that the costs arising from malnutrition lie in the area of about 120 Billion Euros each year (cf. Olle Ljungqvist et al. (2010), "The European fight against malnutrition", Clinical Nutrition, 29, 149-150).

With respect to the healthcare environment, malnutrition may be a factor leading to an increase in complications after medical and surgical treatments as well as prolonged hospital stays. In this regard it is well known that low energy intake reduces the effectiveness of rehabilitation and further delays recovery in a huge number of patients, in particular those aged above 65 years, a group of people considered to be people at high risk of malnutrition.

In this context there is a desire for devices for preparing fluid compositions for enteral nutrition in particular in a hospital and nursing home environment which allow for the preparation of formulations for enteral nutrition having a high energy density. Generally, a fresh and comfortable preparation on site is desirable. Nowadays, fluid compositions for enteral nutrition are typically provided in ready to use form, thus requiring a lot of storage space in hospitals or nursing homes, in particular, when it is aimed to provide several choices of energy density and / or flavours. Alternatively, they may be prepared manually from instant powders, often leading to undesirable variation in quality, such as grainy consistency.

A technical challenge within the preparation of fluid compositions for enteral nutrition lies in the increase of the energy density within such compositions. The challenge herein lies in preparing a fluid composition with a pleasantly smooth and homogenous consistency for a pleasant and easy consumption while at the same time containing a huge variety of ingredients, among these for example relatively high amounts of proteins to achieve high energy densities. At the same time, an easy instant, rapid preparation in, for example in 10 to 30 sec is desirable. The final product should be pleasant to drink and, hence, should not be grainy, sandy or lumpy. Generally, a pleasant flavour and consistent quality from preparation to preparation is desirable.

From WO 2007/135597 A1 an apparatus for preparing baby-milk from water and a dry formula is known, the apparatus comprising a formula supply system with a reservoir for holding formula and feeding means for feeding formula out off the reservoir through an outlet opening. The apparatus furthermore comprises scraping means for moving formula towards and through said outlet opening into the feeding means. The scraping means are arranged to move closely along an inner wall portion of the reservoir that borders on said outlet opening. The feeding means include a rotatable screw and are provided for transporting formula out of the reservoir to a mixer for mixing with water.

US 5,975,365 discloses a beverage dispensing apparatus including a cold water storage tank, a hot water storage tank, a first storage chamber for storing a first ingredient in liquid form, a second storage chamber for storing a second ingredient in powder form and a mixing device for mixing the water and one or more ingredients to obtain a beverage.

Another prior art device and method for preparing a fluid composition is disclosed in document EP1589500 A2.

It is an object of the instant invention to provide a device and a method for preparing a fluid composition for complete or supplemental enteral nutrition being capable of preparing a fluid composition having a high energy density and at the same time having a pleasantly smooth and homogenous consistency.

### Summary of the invention

The device according to the invention is defined in claim 1.

The invention inter alia relates to a device (1) for preparing a fluid composition for complete or supplemental enteral nutrition comprising
- a liquid feeding device (2),
- an ingredient feeding device (3) and
- a mixing device (4) for mixing a liquid fed from the liquid feeding device (2) and at least one ingredient fed from the ingredient feeding device (3), the mixing device comprising a mixer (41) and a mixing container (40) in which the liquid and the at least one ingredient are mixed by the mixer (41),
**wherein**
the device is operable to move the mixing container (40) relative to the mixer (41) during mixing of the liquid and the at least one ingredient of the fluid composition to be prepared. The device is further constructed and arranged so as to carry out at least a first and a second mixing mode, wherein
- in the first mixing mode only the mixer (41) is operated and
- in the second mixing mode the mixer (41) is operated and additionally the mixing container (40) is moved relative to the mixer (41).
Such a device may further be constructed and arranged so as to carry out the first mixing mode for providing fluid enteral nutrition compositions up to a first energy density and the second mixing mode for providing fluid enteral nutrition compositions having a second energy density, wherein the second energy density is higher than the first energy density.

The device is further adapted to execute a first mixing program providing first fluid enteral nutrition compositions up to a first energy density and a second mixing program providing second fluid enteral nutrition compositions having a second energy density;
wherein the first mixing program comprises:
- operating the liquid feeding device (2) to feed a first predetermined amount of the liquid into the mixing container (40);
- operating the ingredient feeding device (3) to feed a first predetermined amount of the at least one ingredient into the mixing container (40);
- mixing the first predetermined amounts of ingredient and liquid by performing the first mixing mode to obtain a first fluid enteral nutrition composition having a first energy density;
wherein the second mixing program comprises:
- performing the first mixing program;
- operating the liquid feeding device (2) to feed a second predetermined amount of the liquid into the mixing container (40);
- operating the ingredient feeding device to feed a second predetermined amount of the ingredient into the mixing container (40);
- mixing the second predetermined amounts of ingredient and liquid and the first fluid enteral nutrition composition by performing the second mixing mode;
wherein further the respective amounts of ingredient and liquid may be predetermined such that the first energy density is smaller than the second energy density.

Such a device may further comprise a control unit wherein the control unit operates the mixing mode(s) and / or mixing program(s). For example, the control unit may further be programmable and the device may further comprise a storage medium receiving device for receiving a removable storage medium. Such a removable storage medium may comprise an executable software code for programming the control unit to carry out the mixing mode(s) and / or mixing program(s).

In such a device, the mixer may further comprise a rotor which is rotatable about an axis of rotation (S2), wherein the device is operable to move the mixing container relative to the rotor to perform a movement (M) along a direction of motion parallel to the axis of rotation (S2).

In such a device, the mixer may further comprise a stator relative to which the rotor is rotatable. Such a stator may further comprise a stator housing which at least partially encloses the rotor and via a shaft is held stationary in the mixing container. The stator housing may have a generally cylindrical shape and may comprise on a top face oriented transverse to the axis of rotation (S2) at least one inlet opening to intake liquid and ingredients contained in the mixing container and on a circumferential side face at least one outlet opening to output fluid into the mixing container.

In such a device comprising a rotor, the rotor may comprise a number of winglets radially extending from the axis of rotation (S2) of the rotor.

In such a device the liquid feeding device may be constituted as a water container. The water container may further be connected to a water inlet for supplying water to the water container. The water inlet may further be connected to the water container via a water treatment unit. Additionally or alternatively, the water inlet may be connected to the water container via a filtration unit. Such a filtration unit may comprise a filter membrane, such as a microsieve membrane, with an average pore size (P) of 0.1 to 0.4 µm, preferably 0.2 to 0.3 µm.

In such a device the ingredient feeding device may further comprise at least one powder container for containing an ingredient provided as powder and/or at least one microcapsules container for containing an ingredient provided as microcapsules and/or at least one liquid container for containing an ingredient in liquid form, each connected to a feeding mechanism for transporting the ingredient to the mixing container of the mixing device.

In such a device the feeding mechanism may further comprise a rotatable screw which is connected to a drive for driving the screw. For example, the feeding mechanism may comprises a rotatable tooth wheel reaching into the associated powder container or microcapsules container and engaging the screw such that the tooth wheel rotates in the associated powder container or microcapsules container (30, 30A-30D) during rotation of the screw.

Such a device wherein the ingredient may be provided in form of a powder comprising macronutrients and micronutrients. Suitable powders ar for example obtainable by using known techniques such as spray-drying from aqueous solution, fluidized bed technique and agglomeration.

The powder may for example comprise macronutrients, such as proteins and carbohydrates, and micronutrients, such as vitamins and minerals. Accordingly, the powder may comprise proteins, carbohydrates and vitamins; preferably proteins, carbohydrates, vitamins and minerals. In addition, the powder may comprise fat.

Proteins may be present in the powder by at least 5wt%, preferably at least 10wt% or even at least 20wt%, such as 5wt% up to 60 wt%, 10wt% - 60 wt%, 20 wt% - 50 wt%, 30-45wt%, 35-40wt%, for example 37wt% based on the total weight of the powder. Typically, proteins are included in the enteral products as amino acid source. The proteins included may be from different sources such as vegetable or animal sources. Suitable proteins can be selected from the list consisting of milk protein, such as casein, whey protein, soy protein, pea protein and hydrolysates thereof. Amino acids may as well be added in their chemical form or in the form of peptides.

Carbohydrates may be present in the powder by at least 5wt%, such as 5-15 wt%, 8-12 wt%, 9-11 wt%, for example 10 wt% based on the total weight of the powder.

Suitable carbohydrate sources may be selected from the group consisting of maltodextirine, glucose syrup, sucrose, starch, isomaltulose, fructose and mixtures thereof.

Vitamins may be present in the powder by 0.1-1.0 wt%, 0.2-0.6 wt%, 0.3-0.5 wt%, for example 0.4 wt% based on the total weight of the powder.
Suitable vitamins may be selected from the group consisting of Vitamin A, B, C, D, E, and mixtures thereof.

Fat may be present in the powder by at least 5 wt% or 10 wt% and up to 40 wt%, such as 20-30 wt%, for example 25 wt% based on the total weight of the powder.
Suitable fats may include fatty acids, such as polyunsaturated fatty acids, monounsaturated fatty acids and polyunsaturated fatty acids. Suitable fatty acids may be selected form the group consisting of caproic acid (C6:0), caprylic acid (C8:0), capric acid (C10:0), lauric acid (C12:0), myristic acid (C14:0), palmitic acid (C16:0), palmitoleic acid (C16:1w7), stearic acid C18:0, oleic acid (C18:1w9), linoleic acid (C18:2w6), a-Linolenic acid (C18:3w3), eicosapentaenoic acid (C20:5w3), docosahexaenoic acid C22:6w3 and mixtures thereof. In addition to said fatty acids, C6-C12 medium chain triglycerides may be added.

In addition, the enteral nutrition product herein may comprise ingredients specifically as dietary fibres. Suitable dietary fibres may be selected from the group consisting of cocoa powder, inulin, wheat dextrine, cellulose, microcrystalline cellulose, soy polysaccharides, tapioca dextrine, xanthan, fructooligosaccharides, galactooligosaccharides, at least partially hydrolized guar gum, acacia gum, pectin, oat fibre, poly dextrose, resistant starch, hemicellulose and mixtures thereof.

Additionally, enteral nutrition powders may optionally comprise ingredients selected from the group consisting of choline, beta-carotene, lutein, lucopene, caffeine, lecithin, taurine, carnitine, myo-inositol, stabilisers, emulsifiers, colorants, aroma and mixtures thereof. Aromas may be caramel, vanilla, yoghurt, chocolate, coffee, cappuccino or fruit aromas.

The at least one ingredient herein is typically provided in from of a powder. Such a powder may be characterized by its particle size distribution. The particle size distribution may range from 10 µm and to 3000 µm, preferably from 100µm to 500µm or 1000µm, such as from 200µm to 500µm.

The particle size distribution may be measured using commonly established methods known to the person skilled in the art. Suitable exemplary methods are sieving, laser diffraction and microscopy. Taking the sieving method as an example, a particle size distribution may be determined by using several sieves with a controlled mesh size, pouring into it a known powder amount and calculating the distribution according to the retained amount of powder in each sieve and correlating the retained amount to a given mesh size.
Defined particle size distributions help ensuring reproducibility of consistency of the fluid enteral nutrition composition prepared by the device herein. Moreover, the particle size distributions above are believed to support the preparation of the fluid enteral nutrition composition using the device herein in shorter times. For this, particles should not be to small, to avoid considerably increased wetting times, but also not too big, in order to still be sufficiently soluble / dispersible.
The invention further relates to a method for preparing a fluid composition for complete or supplemental enteral nutrition, during which
- a liquid and at least one ingredient are fed to a mixing device and
- the mixing device mixes the liquid and the at least one ingredient, the mixing device comprising a mixer and a mixing container in which the liquid and the at least one ingredient are mixed by the mixer,
wherein
during mixing of the liquid and the at least one ingredient of the fluid composition to be prepared, the mixing container is moved relative to the mixer.

In the method, in a first step a first amount of the liquid and a first amount of the at least one ingredient are fed to and mixed by the mixing device, and
in a second step an additional amount of liquid and/or an additional amount of the at least one ingredient are fed to and mixed by the mixing device.

The first step includes carrying out a linear mixing mode and
the second step may include carrying out a chaotic mixing mode. For example, the linear mixing mode may only operate the mixer and the chaotic mixing mode may operate the mixer and move the container relative to the mixer.

The method according to the invention is defined in claim 11.

### Detailed description of the invention

"Enteral nutrition" as used herein refers to a synthetically produced food composition. Enteral nutrition as used herein are provided in fluid form and are of varying consistency, such as drinks, crèmes, gels or puddings (herein also referred to as "fluid composition for enteral nutrition". Thus, enteral nutrition products are artificial products obtained by mixing / dissolving / dispersing ingredients in a liquid, such as water, whereby said ingredients are typically provided in solid form (e.g. powders). The term "enteral nutrition" as used herein excludes non-modified natural foods, such as for example meat, vegetables, fruit in their natural from and conventionally prepared (e.g. cooked) meals as well as conventional food, such as puréed food and yoghurt and the like. In contrast to conventional food products, enteral nutrition products have a controlled composition with respect to their ingredients and nutrient profile, whereby actual control of a patient's diet is enabled. Typically, the enteral nutrition herein is ready to use. "Ready to use" as used herein refers to the final form of the enteral nutrition as served to a patient or any other subject in need thereof.

"Fluid composition for enteral nutrition" as used herein refers either to a fluid composition for complete enteral nutrition or to fluid composition for supplemental enteral nutrition. "Fluid composition for complete enteral nutrition" refers to fluid compositions for enteral nutrition having a nutrient profile which is balanced for complete enteral nutrition and suitable as sole source of nutrition. Such a nutrient profile comprises predefined amounts of energy (kilocalories) per unit mass or unit volume, macronutrients, such as proteins, fat and carbohydrates, as well as micronutrients, such as vitamins and minerals which are essential for body functioning. An example of vitamins and minerals and recommended amounts for complete enteral nutrition can be found in EU directive 1999/21/EC Annex, Table 2 which is incorporated herein by reference. The term "complete enteral nutrition" as used herein generally corresponds to "nutritionally complete foods" as defined by EU directive 1999/21/EC Article 1, paragraph 3 (a) and (b). In practice, a nutritionally complete food may of course also be used to supplement a patient's diet.

""Fluid composition for supplemental enteral nutrition" refers to fluid compositions for enteral nutrition having a nutrient profile which comprises predefined amounts of single or combined macro- and/or micronutrients, such as proteins and/or fat and/or carbohydrates and/or vitamins and/or minerals and/or trace elements. The product composition is, however, not suitable as a sole source of nutrition. Thus, even when it is possible to consume a recommended daily amount of calories in form of such a product an under supply of one or more nutrients will occur. The term "supplemental enteral nutrition" as used herein generally corresponds to "nutritionally incomplete foods" as defined by EU directive 1999/21/EC Article 1, paragraph 3 (c).

"Fluid composition for complete or supplemental enteral nutrition" refers enteral nutrition being generally flowable at room temperature, such as of liquid or up to pudding-like consistency. Generally, fluid compositions are drinkable or spoonable.

"Energy density" as used herein refers to the energy content in kcal per unit weight or unit volume. Thus, a powder having a predetermined energy density, when appropriately dosed and appropriately mixed with e.g. water, yields in a fluid composition for complete or supplemental enteral nutrition having a specific predetermined energy density, typically expressed in kcal / ml.
"Powder" as used herein refers to a powder composition comprising the at least one ingredient. Preferably, the powder comprises more than one ingredients. Such a powder can be fed by the ingredient feeding device herein. Moreover, when mixed appropriately with water, such a powder yields a fluid composition for complete or supplemental enteral nutrition. Accordingly, such a powder may comprise a variety of ingredients in order to provide predetermined levels of macro- and micronutrients.

Accordingly, within a device of the kind stated at the beginning it is provided that the device is operable to move the mixing container relative to the mixer during mixing of the liquid and the at least one ingredient of the fluid composition to be prepared.

Hence, for mixing the liquid and the at least one ingredient in the mixing device the mixing container and the mixer are moved relative to each other during operation of the device. Herein, advantageously the mixing container is moved while the mixer (as a whole) remains stationary such that a relative movement of the mixing container to the mixer is obtained. The movement of the mixing container with respect to the mixer may follow a linear path of motion, but in principle may be directed along an arbitrarily shaped, possibly curved path such that a relative movement is achieved.

In particular, the mixer may comprise a rotor which is rotatable about an axis of rotation and is rotated to mix the liquid and the at least one ingredient within the mixing container of the mixer. The device, in this case, advantageously is operable to move the mixing container relative to the rotor to perform a movement along a direction of motion parallel to the axis of rotation, such that the mixing container is moved longitudinally along the axis of rotation while the rotor is rotated within the mixing container for mixing the liquid and the at least one ingredient fed to the mixing container.

The liquid may for example be water.

Ingredients for the preparation of the fluid composition may for example be, among others, protein-rich substances, pharmaco-nutrients like fish oil having a high omega-3 concentration, glutamine, pre-biotics, pro-biotics or the like. Such ingredients may be present in a powder form, as microspheres (e.g. 2.5 mm in diameter and 5-10 mg in weight) containing encapsulated ingredients, also denoted as microcapsules, or as liquids. Furthermore, also different flavours to be added to the fluid composition may be used as ingredients.

The mixing device may provide for a mixing and/or a dispersing of the at least one ingredient in the liquid. Subsequently, it shall not be distinguished between a mixing to obtain a dispersion of the at least one ingredient in the liquid and a mixing to obtain a mixture of the liquid and the at least one ingredient. From a technical point of view the functionality of the device does in general not depend on whether the liquid and the ingredient(s) shall be mixed or whether the ingredient(s) shall be dispersed in the liquid.

By using a mixing device including a mixer having for example a rotor which is driven to rotate at a large rotational speed during operation and a mixing container that is movable relative to the mixer when preparing the fluid composition, a device is obtained that allows to prepare fluid compositions exhibiting a high energy density, possibly up to 5.5 kcal/ml, and at the same time having a pleasantly smooth and homogenous consistency while requiring a short preparation time in the range of for example 10 to 60 sec., preferably 10 to 30 sec. This, herein, is achieved by providing a dual mixing motion of the mixing container and the mixer relative to each other, namely on the one hand a rotational movement of the rotor of the mixer and on the other hand a lateral, longitudinal movement of the mixing container relative to the mixer as a whole such that a rapid and complete mixing/dispersing can be obtained.

The device according to the invention is in particular suitable to prepare fluid compositions for enteral nutrition having an energy density in the range of 0.5 to 5.5 kcal/ml, preferably in the range of 1.0 kcal/ml to 5.5 kcal/ml.

For example, such fluid compositions for enteral nutrition may have an energy density in the range from 0.5 kcal/ml or 1.0 kcal/ml up to 1.75 kcal/ml, or from more than 1.75 up to 2.25 kcal/ml, or from more than 2.25 up to 5.5 kcal/ml.
The device herein may be adapted to perform a different mixing program for at least two, preferably for each of these ranges.

For example, the device may be adapted to execute the first mixing program providing first fluid enteral nutrition compositions up to a first energy density of 1.75 kcal/ml, for example from 0.5 kcal/ml up to 1.7 kcal/ml, and a second mixing program providing second fluid enteral nutrition compositions having a second energy density of more than 1.75 kcal/ml, for example from 1.8 kcal/ml up to 5.5 kcal/ml, or from 1.8 kcal/ml up to 2.25 kcal/ml;
wherein the first mixing program comprises:
- operating the liquid feeding device (2) to feed a first predetermined amount of the liquid into the mixing container (4);
- operating the ingredient feeding device (3) to feed a first predetermined amount of the at least one ingredient into the mixing container (40);
- mixing the first predetermined amounts of ingredient and liquid by performing the first mixing mode to obtain a first fluid enteral nutrition composition having a first energy density;
wherein the second mixing program comprises:
- performing the first mixing program;
- operating the liquid feeding device to feed a second predetermined amount of the liquid into the mixing container;
- operating the ingredient feeding device to feed a second predetermined amount of the ingredient into the mixing container;
- mixing the second predetermined amounts of ingredient and liquid and the first fluid enteral nutrition composition by performing the second mixing mode;
wherein further the respective amounts of ingredient and liquid may be predetermined such that the first energy density is smaller than the second energy density.

Additionally, such a device may be adapted to execute a third mixing program providing third fluid enteral nutrition compositions enteral nutrition compositions having a third energy density of more than 2.25 kcal/ml, for example from 2.3 kcal/ml up to 5.5 kcal/ml, or up to 3.5 kcal/ml;
wherein the third mixing program comprises:
- performing the first mixing program;
- operating the liquid feeding device to feed a third predetermined amount of the liquid into the mixing container;
- operating the ingredient feeding device to feed a third predetermined amount of the ingredient into the mixing container;
- mixing the third predetermined amounts of ingredient and liquid and the first fluid enteral nutrition composition by performing the second mixing mode;
- operating the liquid feeding device to feed a fourth predetermined amount of the liquid into the mixing container;
- optionally operating the ingredient feeding device to feed a fourth predetermined amount of the ingredient into the mixing container;
- mixing by performing the second mixing mode;
wherein further the respective amounts of ingredient and liquid may be predetermined such that the first energy density is smaller than the second energy density and in that the second energy density is smaller than the third energy density.

The control unit may operate all three mixing programs. The removable storage medium may comprise an executable software code for programming the control unit to carry out the mixing mode(s) and / or mixing program(s), in particular all three mixing programs.

Generally, the steps of
- operating the liquid feeding device to feed a predetermined amount of the liquid into the mixing container; and
- operating the ingredient feeding device to feed a third predetermined amount of the ingredient into the mixing container;
may be performed in any order, with the given order being preferred.
Typically, the steps given in the mixing programs are executed in the given order.

In this regard, the rotational speed of the rotor of the mixer may for example lie in the range of 2000 to 4000 rpm, e.g. at 3000 rpm (the operational rotational speed is chosen for example in dependence of a desired energy density of the fluid composition to be prepared). During rotation of the rotor of the mixer the mixing container is continuously moved up and down along the rotational axis of the rotor of the mixer such that a superposition of the movement of the rotor and the mixing container is obtained.

In a specific embodiment of the mixing device, the mixer comprises a stator relative to which the rotor is rotatable. The stator herein comprises a stator housing which at least partially encloses the rotor and via a shaft is held stationary in the mixing container such that, during operation of the device, the stator and the rotor reach into the mixing container and are placed in the mixing container for mixing/dispersing the liquid and ingredients contained therein.

The stator housing may for example have a generally cylindrical shape and may comprise on a top face - which is oriented transversely to the axis of rotation of the rotor - at least one inlet opening to intake the liquid and the at least one ingredient contained in the mixing container. Furthermore, the stator housing may on a circumferential side face comprise at least one outlet opening to output the liquid and ingredients mixed within the stator by the rotation of the rotor. During operation, the rotor rotates at high speed within the stator housing, causing liquid and ingredients contained in the mixing container to be sucked into the stator housing through the inlet opening(s) provided at the top face of the stator housing. The intake flow is directed at least to some extent along the axis of rotation into the stator housing. Due to the rotation of the rotor within the stator housing, the flow of liquid and ingredients into the stator housing, in a highly turbulent manner, is impelled through the stator housing and out of the outlet opening(s) and thus outputted from the stator housing back into the mixing container.

The inlet opening(s) at the top face of the stator housing may for example have a circular shape and are large enough to allow for a sufficient flow of liquid and ingredients into the stator housing during rotation of the rotor.

The outlet opening(s) may for example have a slot shape and may be arranged in a tilted manner on the stator housing exhibiting a sharp angle with respect to the axis of rotation. Such outlet openings may be arranged in a periodic manner around the entire circumference of the cylindrical stator housing allowing for a radial discharge of the flow of liquid and ingredients in all radial directions out of the stator housing. Due to the forming of the outlet openings as slots the mixture is subjected to a high shear rate as the rotor rotates and pumps the mixture through the slots, hence further accelerating the mixing process.

The rotor may for example comprise a number of winglets extending, in an inner section close to the axis of rotation, radially from the axis of rotation and, at an outer section adjoining the inner section, at a sharp angle with respect to the radial direction.

It shall be noted in this regard that the mixing device may also use other types of mixers, such as mixers having a rotor which is not enclosed by a stator housing, but reaches into the mixing container and freely rotates in the mixing container. For example, mixers may be used having a rotor comprising a screw-like helix which can be rotated about an axis of rotation within the mixing container to mix/disperse ingredients into the liquid. Furthermore, mixers are conceivable which do not use a rotor at all.

The liquid feeding device for preparing the fluid composition may for example be constituted as a water container containing water. The water container may for example be connected to a water inlet such that continuously or when needed water may be supplied to the water container to keep the water container filled and ready to use at all times.

The water inlet may for example be connected to the water container via a water treatment unit such as a heating-and-cooling device allowing to heat or cool the water flowing into the water container as needed and as desired.

Further, a filtration unit may be arranged between the water inlet and the water container providing a filtering of the water flowing into the water container. Such filtration unit may for example comprise a microsieve membrane having for example an average pore size of 0.1 to 0.4 µm, preferably 0.2 to 0.3 µm. With such a filtration unit, a filtering of the water may be achieved without having to heat the water.

The idea of using a filtration unit within a device for preparing a fluid composition for complete or supplemental enteral nutrition may also be used independently from using a mixing device comprising a movable mixing container. Such a device, in general, may for example comprise the following features:
- a liquid feeding device,
- an ingredient feeding device and
- a mixing device for mixing a liquid fed from the liquid feeding device and at least one ingredient fed from the ingredient feeding device, the mixing device comprising a mixer and a mixing container in which the liquid and the at least one ingredient are mixed by the mixer,
wherein the liquid feeding device comprises a filtration unit for filtering liquid fed to the liquid feeding device from a liquid supply and/or liquid fed from the liquid feeding device to the mixing device, the filtration unit comprising a microsieve membrane for filtering the liquid. Herein, the microsieve membrane may for example have an average pore size of 0.1 to 0.4 µm, preferably 0.2 to 0.3 µm and may allow for a filtering of the liquid, for example water, without heating the liquid.

A water treatment and/or a filtration unit of this kind may, additionally or alternatively, also be arranged between the water container and the mixing device such that the water flowing from the water container towards the mixing device may be treated and/or filtered on its way from the water container to the mixing device.

The ingredient feeding device of the device for preparing the fluid composition may for example comprise one or multiple powder containers for containing an ingredient provided in the shape of a powder and/or one or multiple microcapsules container for containing an ingredient provided as microcapsules and/or one or multiple liquid containers for containing an ingredient in liquid form. The device may for example be designed in a way that allows for an easy scaling in that powder containers and/or micro-capsules containers and/or liquid containers may be added or removed to adjust the device for a specific purpose and use within a specific environment such as a hospital and/or nursing home environment. In this way, a versatile device which in an easy way can be adapted to specific needs of users can be provided.

Each of the containers of the ingredient feeding device is connected to a feeding mechanism for delivering the ingredient out of the specific container into the mixing container of the mixing device. The feeding device may, in a specific embodiment, for example comprise a rotatable screw according to the principle of the well-known Archimedes' screw that allows for a transportation of substances in a transportation direction when being rotated along its rotational axis. The rotatable screw is connected to an electric drive which, during operation of the device, rotates the screw and hence delivers ingredients contained in the associated container to the mixing device.

The feeding mechanism furthermore may comprise a rotatable tooth wheel reaching into the associated container and engaging the screw such that the tooth wheel rotates in the associated container during rotation of the screw. The tooth wheel serves to prevent an agglomeration of the powder or microcapsules in the container by stirring the powder or the microcapsules during operation and hence by introducing motion into the powder or microcapsules.

The feeding mechanism is operated by turning the screw when ingredients are to be fed to the mixing device. To avoid the introduction of moisture into the container when the feeding device is not operated, a shutter mechanism may be provided, comprising for example a sliding door which is activated by a solenoid valve during operation of the feeding mechanism to allow the ingredients to be fed to the mixing device, but which is closed when the feeding device is not operated such that the container is tightly sealed and neither allows for an outlet of ingredients nor for an introduction of moisture into the container.

In the case of liquid containers, the content is transferred to the mixing container in a controlled way by using any kind of valve for controlling dosage of liquids, for example a solenoid valve, following software-programmed instructions (open-discharge-close).

The device according to any of the embodiments described above, may additionally comprise a cleaning device, wherein the cleaning device may be operable to perform a cleaning program comprising one or more of the following steps:
- cleaning at least the mixer in hot air stream,
- cleaning at least the mixer with water, preferably hot water.

The cleaning device may optionally comprise a detergent and/or disinfectant feeding device. In such embodiments, the cleaning program may additionally comprise the step of operating the detergent and/or disinfectant feeding device and contacting the mixer with the detergent and/or disinfectant.

The device according to any of the embodiments described above, may additionally comprise a heating and / or cooling device enabling preparation of fluid enteral nutrition at various temperatures. For example in a temperature range from 7-70°C or up to 80°C. In such an embodiment, the device may be operable to execute mixing programys adapted for specific temperature ranges. Suitable executable software codes for programming the control unit to carry out the additional mixing programs may be additionally comprised by the removable storage medium.

The object underlying the invention furthermore is achieved through a method for preparing a fluid composition for complete or supplemental enteral nutrition, during which
- a liquid and at least one ingredient are fed to a mixing device and
- the mixing device mixes the liquid and the at least one ingredient, the mixing device comprising a mixer and a mixing container in which the liquid and the at least one ingredient are mixed by the mixer.

Within this method, it is provided that, during mixing of the liquid and the at least one ingredient of the fluid composition to be prepared, the mixing container is moved relative to the mixer.

With regard to advantages and advantageous embodiments of the invention it shall be referred to the above description.

Within the method according to the invention a liquid and at least one ingredient are fed to the mixing device. In this regard it may be provided to perform the feeding in a specific sequence, for example in that in a first step a first amount of the liquid and a first amount of the at least one ingredient are fed to and mixed by the mixing device and in a second step an additional amount of liquid and/or an additional amount of the at least one ingredient are fed to and mixed by the mixing device. Hence, in the beginning only a portion of the liquid and the ingredient(s) are fed to the mixing container to be mixed by the mixer. After a certain amount of mixing, then, further liquid and/or ingredient(s) are added for further mixing. Such steps may be repeated until the desired fluid composition with a desired consistency is obtained.

In this regard it is to be noted that in different steps different ingredients may be added to the mixing device. For example, in a first step a first ingredient may be fed to the mixing device together with a liquid such as water. In a second step, then, a different, second ingredient may be added to the mixing device and in further steps further ingredients and/or further liquid, possibly different liquids from different liquid feeding devices, may be fed to the mixing device.

The sequential addition of ingredients may be chosen dependent on the energy density selected by a user. The particular sequence for adding ingredients and liquid may for example be programmed beforehand for a predetermined set of energy densities from which a user can choose during operation of the mixing device, such that the ingredients and liquid are added sequentially to the mixing device in an automatic, software-controlled manner for preparing a fluid composition of a user's choice.

The idea underlying the invention shall subsequently be described in detail with respect to the embodiments shown in the drawings of the figures. Herein,
- Fig. 1: shows a schematic view of a device for preparing a fluid composition for complete or supplemental enteral nutrition;
- Fig. 2: shows a schematic flow diagram of a device for preparing a fluid composition for complete or supplemental enteral nutrition;
- Fig. 3: shows a drawing of an ingredient feeding device coupled to a mixing device;
- Fig. 4: shows a schematic view of a feeding device;
- Fig. 5: shows a view of an embodiment of a screw for transportation of ingredients within the feeding device;
- Fig. 6: shows a schematic view of a mixing device comprising a mixing container and a mixer placed in the mixing container;
- Fig. 7A: shows a top view of a rotor of the mixing device;
- Fig. 7B: shows a sectional view of the rotor along line A-A according to Fig. 7A;
- Fig. 8A: shows a side view of a stator of the mixing device;
- Fig. 8B: shows a top view of the stator;
- Fig. 9: shows another view of the mixing device;
- Fig. 10: shows a view of an alternative embodiment of a mixing device;
- Fig. 11: shows a detailed view of a tip of the mixing device according to Fig. 10; and
- Fig. 12: shows a detailed view of a microsieve membrane of a filtration unit of the device for preparing the fluid composition for complete or supplemental enteral nutrition.

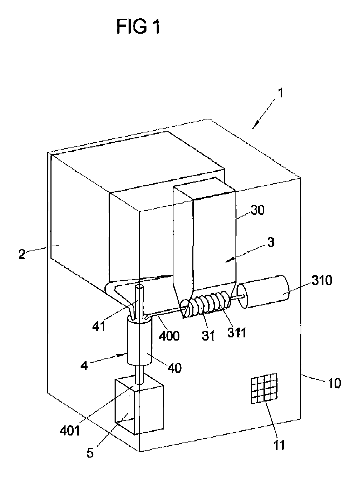

Fig. 1 shows in a schematic drawing a device 1 for preparing a fluid composition for complete or supplemental enteral nutrition - e.g. complete, balanced or supplemental enteral nutrition. The device 1 comprises a water container 2 constituting a liquid feeding device, an ingredient feeding device 3 having a powder container or microcapsules container 30 and a mixing device 4 for mixing water fed from the water container 2 and ingredients fed from the feeding device 3.

The feeding device 3 comprises a feeding mechanism 31 with a drive 310 and a screw 311 which can be rotated by the drive 310 and is operative to feed ingredients contained in the container 30 towards an inlet 400 of the mixing device 4.

The mixing device 4 comprises a mixer 41 disposed in a mixing container 40 and is operative to mix water fed from the water container 2 and ingredients fed from the feeding device 3 in the mixing container 40, such that a readily prepared fluid composition can be outputted via an outlet 401 to fill a container, mixing container, glass or the like placed in a product delivery facility 5.

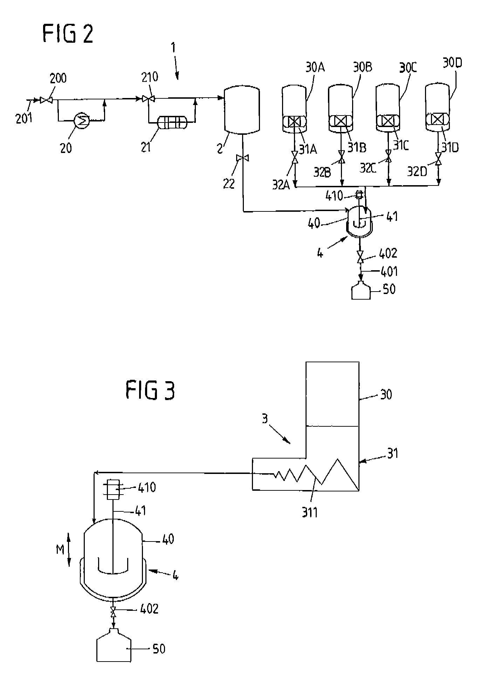

Fig. 2 shows a schematic flow diagram of the device 1. As indicated in Fig. 2, the device 1 may comprise a number of different containers 30A-30D for containing ingredients in the form of powders and/or in the form of microcapsules to be fed via feeding mechanisms 31A-31D and valves 32A-32D to the mixing device 4. The water container 2 is coupled to the mixing device via a further valve 22, such that via the valves 22, 32A-32D the feeding of water from the water container 2 respectively ingredients from the containers 30A-30D can be controlled in combination with the actuation of one or multiple of the feeding devices 31A-31D for actively transporting ingredients from the containers 30A-30D towards the mixing device 4.

As furthermore visible from Fig. 2, the water container 2 is connected to a water inlet 201 for supplying water to the water container 2. Herein, the water inlet 201 is connected to the water container 2 via valves 200, 210 and furthermore via a water treatment unit constituted as a heating-and-cooling unit 20 and a filtration unit 21.

Via the heating-and-cooling unit 20, water supplied from the water inlet 201 may be heated to temperatures up to 80°C or cooled down to temperatures as low as 6°C to provide heated respectively cooled water to the water container 2 for preparing hot or cold fluid compositions.

Via the filtration unit 21, the water supplied to the water container 2 may be filtered, wherein the filtration unit 21 may be constituted as a micro-filtration microsieve-based unit comprising a microsieve membrane with an average pore size of for example 0.26 µm allowing for an effective filtering of cold water, hence eliminating the need to heat the water to sterilize the water supplied to the water container 2.

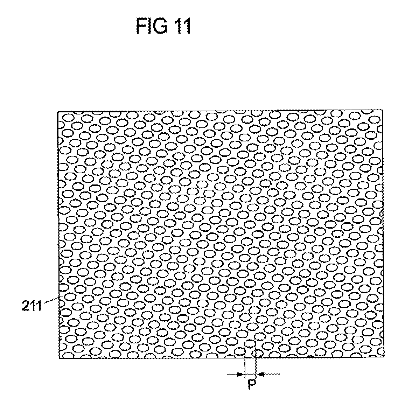

A microsieve membrane of this kind - as shown in an exemplary embodiment in Fig. 12 and indicated with reference numeral 211 therein - can be characterized by its pore size P. Using such a microsieve membrane 211 having a pore size P of for example 0.26 µm, high permeation fluxes can be obtained while at the same time providing an efficient filtering of cold liquids such that a cold sterilisation of the liquid passing through the membrane can be achieved. The microsieve membrane 211 may for example be fabricated from silicone or a silicone compound and may have a well-structured and constant morphology exhibiting a highly controllable, nearly homogeneous porosity and thin selective layer having a narrow pore-size distribution around an average pore size P of for example 0.26 µm.

As it is indicated in Fig. 1, the device 1 may be placed in a housing 10 to provide a compact device 1 which can be located for example on a hospital floor or in a nurses room and/or in nursing homes, for easy use and easy access. The housing 10 of the device 1 may for example have a height of 600 mm, a depth of 380 mm and a width of 300 mm. The housing may for example be manufactured from a height-strength plastic material such as a fibre-reinforced plastic, or from aluminium.

The containers 30A-30D containing powder or microcapsules may for example be made of plastics and may each have a capacity of for example of 1 to 2 kg of ingredients.

As furthermore indicated in Fig. 1, the device 1 may comprise a choice field 11 on the housing 10 via which a user may choose between different settings and fluid compositions to be prepared by the device 1. For example, via the choice field 11, a user may choose between different flavours of the fluid composition to be prepared, between hot and cold fluid compositions and between different ingredients. Furthermore, a user may select for example a specific energy density of the fluid composition to be prepared, for example between 0.5 kcal/ml and 5.5 kcal/ml, and a volume of the fluid composition, for example between 50 ml and 200 ml.

The mixing device 4 of the device 1, as mentioned above, is used to mix water fed from the water container 2 and ingredients fed from one or multiple of the containers 30A-30D. The mixing device 4, for this, comprises a mixing container 40 to which the water and the ingredients are fed and a mixer 41 for mixing the water and the ingredients to obtain a desired mixture or dispersion of the water and the ingredients, which then can be supplied via a valve 402 and the outlet 401 to a container 50 to be delivered for example to a patient.

Referring to Figs. 3 to 9, the construction and operation of the feeding device 3 and the mixing device 4 shall subsequently be explained in more detail.

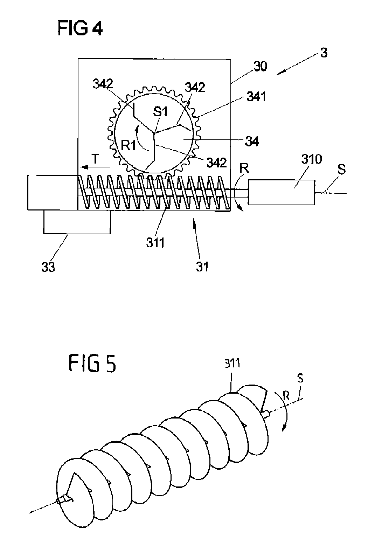

Figs. 3 and 4 show in schematic views a feeding device 3 comprising a container 30 containing for example ingredients in the shape of powder or in the shape of microcapsules. The container 30 is in operative connection with a feeding mechanism 31 comprising a screw 311, which is operative to transport ingredients from the container 30 in the direction of the mixing container 40 of the mixing device 4.

The screw 311 of the feeding mechanism 31 is constructed following the principle of the well-known Archimedes' screw. An embodiment of such a screw 311 is shown in Fig. 5, the screw 311 exhibiting a screw thread of constant inclination winding around an axis S along which the screw 311 extends and about which the screw 311 is rotatable.

As schematically indicated in Fig. 4, the screw 311 is connected to the drive 310 and, by actuating the drive 310, can be rotated about the axis of rotation S in a direction of rotation R. By rotating the screw 311 in the direction of rotation R, ingredients contained in the container 30, in the shape of powder or microcapsules, are transported in a transport direction T towards the mixing device 4 for being mixed with or dispersed in water coming from the water container 2.

As furthermore indicated schematically in Fig. 4, the feeding device 3 comprises a shutter mechanism 33 having for example a sliding door which selectively is opened or closed dependent on whether the drive 310 is actuated for rotating the screw 311 or not. Hence, if ingredients shall be fed to the mixing device 4 by actuating the drive 310, an outlet of the feeding device 3 is opened via the shutter mechanism 33 such that ingredients may be transported towards the mixing device 4. If no ingredients shall be fed to the mixing device 4 and accordingly the drive 310 is not operated, the outlet is closed via the shutter mechanism 33 such that the container 30 is tightly sealed and no ingredients can leave and no moisture can enter the container 30.

As visible in Fig. 4, a tooth wheel 34 is arranged in the container 30 to be rotatable around an axis of rotation S1 such that the tooth wheel 34 can rotate within the container 30. The tooth wheel 34 via an outer toothing 341 engages with the screw 311 such that the tooth wheel 34 is rotated in a direction of rotation R1 around its axis of rotation S1 when the screw 311 is rotated and moved driven by the drive 310. Via the tooth wheel 34 comprising a number of winglets 342 axially extending into the container 30, a constant stirring of the ingredients contained in the container 30 is achieved when the screw 311 is rotated such that the ingredients in the shape of powder or microcapsules are kept in motion preventing the formation of agglomerates.

Winglets 342 axially protruding from a surface of the tooth wheel 34 may be provided on both axial sides of the tooth wheel 34 and may be specifically designed and shaped for obtaining a beneficial stirring of the ingredients in the container 30.

As schematically shown in Fig. 3, ingredients fed from the feeding device 3 are transported in the direction of the mixing device 4 and are supplied to the mixing container 40 of the mixing device 4. Within the mixing device 4, the ingredients fed from the feeding device 3 are mixed and possibly dispersed in water supplied from the water container 2 to obtain the desired fluid composition.

The mixing device 4, herein, achieves a beneficial mixture and/or dispersion of the ingredients and the water fed from the feeding device 3 respectively the water container 2 on the one hand by means of a mixer 41 being placed in the mixing container 40 and driven by a drive 410 and on the other hand by introducing a movement M of the mixing container 40 along an axis of rotation S2 of the mixer 41.

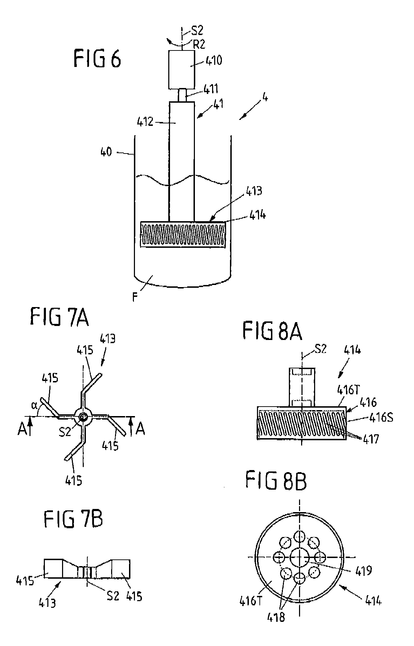

An embodiment of such a mixing device 4 is shown in Figs. 6 to 9. The mixer 41 of the mixing device 4 comprises a drive 410 driving a drive shaft 411 connected to a rotor 413 (see Figs. 6 and 7A, 7B). The mixer 41 further comprises a shaft 412 providing a bearing for the drive shaft 411 and being in a stationary fashion connected to the housing 1 (see Fig. 1) or a structural part in connection with the housing 1. The shaft 412 is connected to a stator 414 (see Figs. 6 and 8A, 8B) comprising a stator housing 416 in which the rotor 413 is rotatably enclosed. The stator 414 is fixedly connected and held via the shaft 412 and is placed inside the mixing container 40 to interact with the water and ingredients being fed into the mixing container 40 for mixing.

As is visible from Figs. 7A and 7B, the rotor 413 comprises four winglets 415. The rotor 413 is fixedly connected to the drive shaft 411 and, driven by the drive shaft 411, can be rotated around an axis of rotation S2 to rotate inside the stator housing 416 of the stator 414. The winglets 415, with an inner section, extend in a direction radial to the axis of rotation S2 and, in an outer section, are tilted to form a sharp angle α with the radial direction with respect to the axis of rotation S2.

As visible from Figs. 8A and 8B, the stator 414 comprises a stator housing 416 having a cylindrical shape with a top face 416T and a circumferential, cylindrical side face 416S enclosing the rotor 413 (the stator housing 416 is open its bottom).

On the top face 416T, in total eight inlet openings 418 (see Fig. 8B) in the shape of circular openings are provided, the inlet openings 418 being equally spaced in a circumferential direction on a circle around a central opening 419. Via the inlet openings 418, water and ingredients contained in the mixing container 40 may flow into the stator 414 caused by a rotation of the rotor 413 within the stator housing 416. Through the central opening 419 the drive shaft 411 extends and on the inside of the stator housing 416 is connected with the rotor 413 such that the rotor 413 can be driven via the drive 410 and the drive shaft 411 to rotate within the stator housing 416.

On the cylindrical side face 416S of the stator housing 416 a number of outlet openings 417 are provided, the outlet openings 417 being equally spaced around the circumference of the stator housing 416 and having the shape of slots tilted with respect to the axis of rotation S2. Through the outlet openings 417 water and ingredients mixed and agitated within the stator 414 in a turbulent manner can be radially discharged from the stator 414 to flow back into the mixing container 40 such that, due to the rotation of the rotor 413 in the stator 414, a mixing flow through the stator 414 during operation of the mixer 41 is impelled.

Due to the slot-shape of the outlet openings 417 the liquid-ingredient flow radially pumped through the outlet openings 417 out of the stator 414 is subjected to a high shear rate, further facilitating the mixing process.

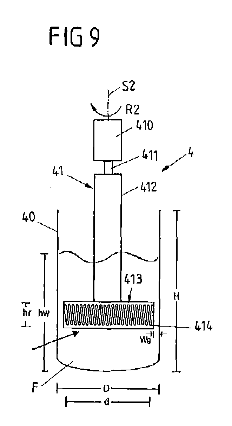

As indicated in Fig. 9, the mixing container 40 may have a height H of for example 110 to 120 mm and a diameter D of for example 50 to 60 mm. The mixing container 40 may have a generally cylindrical shape and may be closed at its bottom and open at its top. The stator 414 is advantageously placed concentrically to the mixing container 40 and may for example have a height hr of for example 15 mm and a diameter d of for example 45 to 55 mm, resulting in a radial distance Wg between the side face 416S of the stator housing 416 and the inside of the mixing container 40 of for example 2 to 4 mm. The filling height hw up to which the mixing container 40 is filled with liquid and/or ingredients may for example lie between 21 and 50 mm.

As mentioned above, for mixing water and ingredients fed to the mixing container 40, on the one hand the rotor 413 is rotated with respect to the stator 414 at for example a rotational speed of 3000 rpm and on the other hand the mixing container 40 is longitudinally moved along the axis of rotation S2, hence performing a movement M with respect to the stator 413 along the axis of rotation S2. Through the superposition of the rotational movement of the rotor 413 on the one hand and the longitudinal movement M of the mixing container 40 on the other hand, a beneficial, efficient mixing of the water and the ingredients in the mixing container 40 can be achieved, allowing for the preparation of fluid compositions having a large energy density of for example up to 5.5 kcal/ml and exhibiting a pleasantly smooth and homogenous consistency obtained in a comparatively short preparation time of for example 10 to 30 sec.

The amplitude of the motion of the mixing container 40 may depend on the volume of the fluid composition to be prepared and may lie within the range of the filling height hw. The speed may for example lie in the range of 0.5 to 10 mm/s, for example at 1 mm/s.

Due to the advantageous design of the mixing device 4 high amounts of dry ingredients (e.g. total mass fraction of ingredients >35% in the resulting fluid composition) may in an efficient way and in short durations of time (e.g. 10 to 30 sec.) be mixed and/or dispersed in liquids such as water to obtain a smooth and homogenous fluid composition to be consumed by a consumer.

With the device described herein protein concentrations in prepared nutrition formulae may by as high as 10% (w/w ("weight in weight")).

The device 1 may be designed and configured in such a way that a user, for example via a choice field 11 as indicated in Fig. 1, can choose and select the type and characteristics of the fluid composition (e.g. the flavour, the energy density, the texture (for example creamy, pudding, foaming), hot or cold, with or without pharmaco-nutrients and the like). Dependent on the user's choice the required amount of ingredient(s) and the required volume of water is fed to the mixing device 4 for mixing the final fluid composition and supplying it to the user.

For controlling the different feeding devices 30A-30D (see Fig. 2), the water container 2, the different valves 200, 210, 22, 32A-32D, 402 and for operating the different devices and units 20, 21, 31A-31D, 41 a suitable control circuitry may be implemented and programmed via software.

The control software may be designed for a complete control of the operation of the mixing device 1, such as for controlling the opening and closing of the valves 22, 32A-32D, 200, 210, 402 and for controlling the operation of electrical motors for driving the mixer 41 and/or the motion of the mixing container 40. The control software may be configured to for example perform the following operations once the mixing container 40 has been placed and the flavour and the energetic density (for example in the range between 0.5 to 5.5 kcal/ml) have been chosen by a user:
- open the valve 22 associated with the water container 2 to let water flow from the water container 2 into the mixing container 40;
- close the valve 22 once the required volume of water has been dispensed;
- initiate operation of at least one of the feeding mechanisms 31A-31D and actuate the associated valve(s) 32A-32D such that ingredients are fed to the mixing container 40;
- stop operation of the feeding mechanisms 31A-31 D once the required amount of ingredients has been fed to the mixing container 40; and
- start operation of the mixing device 4 by operating the mixer 41 and move the mixing container 40 up and down along the axis of rotation S2 of the mixer 41.

Depending on the desired energy density, the water and the ingredients may be fed in one or two steps or in a sequential mode using multiple, repeated steps.

In a specific example, it for example may be provided to add in a first step 70 ± 1 ml of water and in a second step 30 ± 1 ml of ingredients (e.g. in powder form) to obtain a fluid composition having an energy density of 1.5 kcal/ml and a total final volume of 100 ml. The preparation time may for example lie in the range of 35 to 45 seconds.

In another specific example, it may be provided to add in a first step 20 ± 1 ml of water and 25 ± 1 g of ingredients, in a second step 20 ± 1 ml of water and 25 ± 1 g of ingredients, and in a third step 10 ± 1 ml of water to obtain a fluid composition having an energy density of 2.5 kcal/ml and a total final volume of 100ml. The preparation time may for example lie in the range of 60 to 70 seconds.

In general, to allow for a preparation of fluid compositions having a large energy density, the movement of the mixing container 40 as well as the geometry and construction of the mixer 41 and the sequence of adding liquid and ingredients to the mixing device 4 effect a fast mixing and/or dispersion of ingredients in the liquid, hence allowing for a short processing time of readily prepared, homogeneous fluid compositions.

To further facilitate the preparation of fluid compositions having a high energy density, specific ingredients in powder form may be used, having for example the following physical characteristics:
- total energy for aeration (mJ) > 600 for air velocities from 0 to 20 mm/s (which is a property of the final prepared powder to be used in the device and to be fed to the mixing device),
- compressibility between 2 and 10 % for normal stresses ranging from 1 to 20 kPa, and
- permeability (mbar) between 0.1 and 1.0 for normal stresses ranging from 1 to 20 kPa.

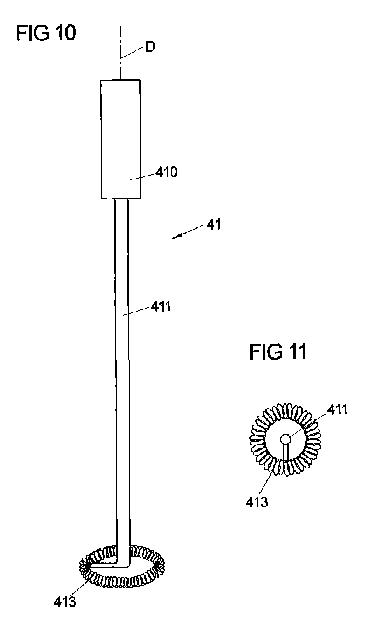

As indicated in Fig. 10 and 11, also other mixers 41 than the one described above in reference to Figs. 6 to 9 may be used, for example comprising a drive 401 with a drive shaft 411 on whose tip a rotor 413 constituted as a wound helix is located and, thus, avoiding the use of a stator enclosing the rotor 413. However, also completely different constructions of mixers are conceivable and can possibly used in connection with the device 1 described herein.

The idea of the invention is not limited to the specific exemplary embodiments described above.

For example, the device may be set up to be scalable such that, dependent on specific wishes and needs of a user, water or other liquid containers as well as powder and/or microcapsules containers can easily be added or removed to allow for an easy configuration and adaption to particular set-ups.

Furthermore, although a specific embodiment of a feeding device has been described herein, also other embodiments of such feeding devices allowing for a transportation of ingredients are conceivable.

### List of Reference Numerals

- 1: Device for preparing fluid compositions
- 10: Housing
- 11: Choice field
- 2: Water container
- 20: Water treatment unit (Heating-and-cooling unit)
- 200: Valve
- 201: Water inlet
- 21: Filtration unit
- 210: Valve
- 211: Microsieve membrane
- 22: Valve
- 3: Ingredient feeding device
- 30, 30A, 30B, 30C: Powder container
- 30D: Microcapsules container
- 31, 31A, 31B, 31C, 31D: Feeding mechanism
- 310: Drive
- 311: Screw
- 32A, 32B, 32C, 32D: Valve
- 33: Shutter mechanism
- 34: Tooth wheel
- 340: Axis of rotation
- 341: Toothing
- 342: winglets
- 4: Mixing device
- 40: Mixing container
- 400: Inlet
- 401: Outlet
- 402: Valve
- 41: Mixer
- 410: Drive
- 411: Drive shaft
- 412: Schaft
- 413: Rotor
- 414: Stator
- 415: Winglets
- 416: Stator housing
- 416S: Side face
- 416T: Top face
- 417: Outlet openings (slots)
- 418: Inlet openings
- 419: Central opening
- 5: Product delivery
- 50: Container
- α: Angle
- D, d: Diameter
- F: Fluid composition
- H, hr, hw: Height
- M: Movement
- P: Pore Size
- R, R1, R2: Rotation direction
- S, S1, S2: Axis of rotation
- T: Transport direction
- Wg: Distance

## Claims

1. Device (1) for preparing a fluid composition for complete or supplemental enteral nutrition, comprising
- a liquid feeding device (2),
- an ingredient feeding device (3) and
- a mixing device (4) for mixing a liquid fed from the liquid feeding device (2) and at least one ingredient fed from the ingredient feeding device (3), the mixing device (4) comprising a mixer (41) and a mixing container (40) in which the liquid and the at least one ingredient are mixed by the mixer (41),
wherein
the device (1) is operable to move the mixing container (40) relative to the mixer (41) during mixing of the liquid and the at least one ingredient of the fluid composition to be prepared,
wherein the device (1) is constructed and arranged so as to carry out at least a first and a second mixing mode, wherein in the first mixing mode only the mixer (41) is operated and in the second mixing mode the mixer (41) is operated and additionally the mixing container (40) is moved relative to the mixer (41) and
**characterized in that**
the device is constructed and arranged so as to carry out the first mixing mode for providing fluid enteral nutrition compositions up to a first energy density and the second mixing mode for providing fluid enteral nutrition compositions having a second energy density, wherein the second energy density is higher than the first energy density.

2. Device according to claim 1, wherein the device (1) is adapted to execute a first mixing program providing first fluid enteral nutrition compositions up to a first energy density and a second mixing program providing second fluid enteral nutrition compositions having a second energy density,
wherein the first mixing program comprises:
- operating the liquid feeding device (2) to feed a first predetermined amount of the liquid into the mixing container (40);
- operating the ingredient feeding device (3) to feed a first predetermined amount of the ingredient into the mixing container (40);
- mixing the first predetermined amounts of ingredient and liquid by performing the first mixing mode to obtain a first fluid enteral nutrition composition having a first energy density;
wherein the second mixing program comprises:
- performing the first mixing program;
- operating the liquid feeding device (2) to feed a second predetermined amount of the liquid into the mixing container (40);
- operating the ingredient feeding device (3) to feed a second predetermined amount of the ingredient into the mixing container (40);
- mixing the second predetermined amounts of ingredient and liquid and the first fluid enteral nutrition composition by performing the second mixing mode;
further **characterized in that** the respective amounts of ingredient and liquid are predetermined such that the first energy density is smaller than the second energy density.

3. Device according to any of the preceding claims, further comprising a control unit wherein the control unit operates the mixing mode(s) and / or mixing program(s) of the preceding claims; preferably
the control unit is programmable and the device (1) comprises a storage medium receiving device for receiving a removable storage medium; more preferably
the removable storage medium comprises an executable software code for programming the control unit to carry out the mixing mode(s) and / or mixing program(s) of the preceding claims.

4. Device according to any preceding claim, **characterized in that** the mixer (41) comprises a rotor (413) which is rotatable about an axis of rotation (S2), wherein the device (1) is operable to move the mixing container (40) relative to the rotor (413) to perform a movement (M) along a direction of motion parallel to the axis of rotation (S2); preferably
the mixer (41) comprises a stator (414) relative to which the rotor (413) is rotatable more preferably
the stator (414) comprises a stator housing (416) which at least partially encloses the rotor (413) and via a shaft (412) is held stationary in the mixing container (40); even more preferably
the stator housing (416) has a generally cylindrical shape and comprises on a top face oriented transverse to the axis of rotation (S2) at least one inlet opening (418) to intake liquid and ingredients contained in the mixing container and on a circumferential side face (416S) at least one outlet opening (417) to output fluid into the mixing container.

5. Device according to claim 4, **characterized in that** the rotor (413) comprises a number of winglets (415) radially extending from the axis of rotation (S2) of the rotor (413).

6. Device according to one of the preceding claims, **characterized in that** the liquid feeding device is constituted as a water container (2); preferably the water container (2) is connected to a water inlet (201) for supplying water to the water container (2); more preferably
the water inlet (201) is connected to the water container (2) via a water treatment unit (20).

7. Device according to claim 6, **characterized In that** the water inlet (201) is connected to the water container (2) via a filtration unit (21).

8. Device according to claim 7, **characterized In that** the filtration unit (21) comprises a microsieve membrane (211) with an average pore size (P) of 0.1 to 0.4 µm, preferably 0.2 to 0.3 µm.

9. Device according to one of the preceding claims, **characterized in that** the ingredient feeding device (3) comprises at least one powder container (30, 30A-30D) for containing an ingredient provided as powder and/or at least one microcapsules container (30, 30A-30D) for containing an ingredient provided as microcapsules and/or at least one liquid container (30, 30A-30D) for containing an ingredient in liquid form, each connected to a feeding mechanism (31, 31A-31D) for transporting the ingredient to the mixing container (40) of the mixing device (4); preferably
the feeding mechanism (31, 31A-3D) comprises a rotatable screw (311) which is connected to a drive (310) for driving the screw (311); more preferably the feeding mechanism (31, 31A-31D) comprises a rotatable tooth wheel (34) reaching into the associated powder container (30, 30A-30D) or microcapsules container (30, 30A-30D) and engaging the screw (311) such that the tooth wheel (34) rotates in the associated powder container (30, 30A-30D) or microcapsules container (30, 30A-30D) during rotation of the screw (311).

10. Device according to any of the preceding claims, wherein a powder including the at least one ingredient is fed from the ingredient feeding device, wherein the powder has a particle size distribution ranging from 10µm - 3000µm and preferably comprises at least proteins, carbohydrates and minerals; preferably the powder comprises at least 10% by weight of protein.

11. Method for preparing a fluid composition for complete or supplemental enteral nutrition, during which
- a liquid and at least one ingredient are fed to a mixing device (4) and
- the mixing device (4) mixes the liquid and the at least one ingredient, the mixing device (4) comprising a mixer (41) and a mixing container (40) in which the liquid and the at least one ingredient are mixed by the mixer (41),
**characterized in**
**that**, during mixing of the liquid and the at least one ingredient of the fluid composition to be prepared, the mixing container (40) is moved relative to the mixer (41), wherein
in a first step a first amount of the liquid and a first amount of the at least one ingredient are fed to and mixed by the mixing device (4), and in a second step an additional amount of liquid and/or an additional amount of the at least one ingredient are fed to and mixed by the mixing device (4) and
wherein in the first step includes carrying out a linear mixing mode and the second step includes carrying out a chaotic mixing mode and
wherein the fluid composition for enteral nutrition has an energy density of 1.0-5.5kcal/ml.

12. Method according to claim 11, wherein the linear mixing mode only operates the mixer and wherein the chaotic mixing mode operates the mixer and moves the container relative to the mixer.

## Patentansprüche

1. Vorrichtung (1) zur Herstellung einer Flüssigkeitszusammensetzung zur vollständigen oder ergänzenden enteralen Ernährung, umfassend
- eine Flüssigkeitszuführungsvorrichtung (2),
- eine Inhaltsstoffzuführungsvorrichtung (3) und
- eine Mischvorrichtung (4) zum Mischen einer Flüssigkeit, die von der Flüssigkeitszuführungsvorrichtung (2) zugeführt wurde, und wenigstens eines Inhaltsstoffs, der von der Inhaltsstoffzuführungsvorrichtung (3) zugeführt wurde, wobei die Mischvorrichtung (4) einen Mischer (41) und einen Mischbehälter (40) umfasst, in dem die Flüssigkeit und der wenigstens eine Inhaltsstoff vom Mischer (41) vermischt werden,
wobei die Vorrichtung (1) betätigt werden kann, um den Mischbehälter (40) im Verhältnis zum Mischer (41) während des Mischens der Flüssigkeit und des wenigstens einen Inhaltsstoffs der herzustellenden Flüssigkeitszusammensetzung zu bewegen,
wobei die Vorrichtung (1) so konstruiert und angeordnet ist, dass sie wenigstens einen ersten und einen zweiten Mischmodus ausführt, wobei im ersten Mischmodus nur der Mischer (41) betätigt wird und im zweiten Mischmodus der Mischer (41) betätigt wird und zusätzlich der Mischbehälter (40) im Verhältnis zum Mischer (41) bewegt wird, und **dadurch gekennzeichnet, dass** die Vorrichtung so konstruiert und angeordnet ist, dass sie den ersten Mischmodus zur Bereitstellung von flüssigen enteralen Ernährungszusammensetzungen bis zu einer ersten Energiedichte ausführt und den zweiten Mischmodus zur Bereitstellung von flüssigen enteralen Ernährungszusammensetzungen mit einer zweiten Energiedichte ausführt, wobei die zweite Energiedichte höher als die erste Energiedichte ist.

2. Vorrichtung nach Anspruch 1, wobei die Vorrichtung (1) ausgelegt ist, ein erstes Mischprogramm auszuführen, das erste flüssige enterale Ernährungszusammensetzungen bis zu einer ersten Energiedichte bereitstellt, und ein zweites Mischprogramm auszuführen, das zweite flüssige enterale Ernährungszusammensetzungen mit einer zweiten Energiedichte bereitstellt,
wobei das erste Mischprogramm das Folgende umfasst:
- Betätigen der Flüssigkeitszuführungsvorrichtung (2) zur Zuführung einer ersten vorbestimmten Menge der Flüssigkeit in den Mischbehälter (40);
- Betätigen der Inhaltsstoffzuführungsvorrichtung (3) zur Zuführung einer ersten vorbestimmten Menge des Inhaltsstoffs in den Mischbehälter (40);
- Mischen der ersten vorbestimmten Mengen des Inhaltsstoffs und der Flüssigkeit durch Durchführung des ersten Mischmodus, um eine erste flüssige enterale Ernährungszusammensetzung mit einer ersten Energiedichte zu erhalten;
wobei das zweite Mischprogramm das Folgende umfasst:
- Durchführen des ersten Mischprogramms;
- Betätigen der Flüssigkeitszuführungsvorrichtung (2) zur Zuführung einer zweiten vorbestimmten Menge der Flüssigkeit in den Mischbehälter (40);
- Betätigen der Inhaltsstoffzuführungsvorrichtung (3) zur Zuführung einer zweiten vorbestimmten Menge des Inhaltsstoffs in den Mischbehälter (40);
- Mischen der zweiten vorbestimmten Mengen des Inhaltsstoffs und der Flüssigkeit und der ersten flüssigen enteralen Ernährungszusammensetzung durch Durchführung des zweiten Mischmodus;
ferner **dadurch gekennzeichnet, dass** die jeweiligen Mengen von Inhaltsstoff und Flüssigkeit so vorbestimmt sind, dass die erste Energiedichte kleiner als die zweite Energiedichte ist.

3. Vorrichtung nach einem der vorhergehenden Ansprüche, ferner umfassend eine Steuereinheit, wobei die Steuereinheit den Mischmodus bzw. die Mischmodi und/oder das bzw. die Mischprogramm(e) der vorhergehenden Ansprüche betätigt;
wobei die Steuereinheit vorzugsweise programmierbar ist und die Vorrichtung (1) eine Speichermedium-Aufnahmevorrichtung zur Aufnahme eines entfernbaren Speichermediums umfasst;
wobei das entfernbare Speichermedium insbesondere einen ausführbaren Softwarecode zur Programmierung der Steuereinheit umfasst, um den bzw. die Mischmodus bzw. Mischmodi und/oder Mischprogramm(e) der vorhergehenden Ansprüche durchzuführen.

4. Vorrichtung nach einem der vorhergehenden Ansprüche, **dadurch gekennzeichnet, dass** der Mischer (41) einen Rotor (413) umfasst, der um eine Drehachse (S2) drehbar ist, wobei die Vorrichtung (1) betätigt werden kann, um den Mischbehälter (40) im Verhältnis zu dem Rotor (413) zu bewegen, um eine Bewegung (M) entlang einer Bewegungsrichtung parallel zu der Drehachse (S2) durchzuführen;
wobei der Mischer (41) vorzugsweise einen Stator (414) umfasst, im Verhältnis zu dem der Rotor (413) drehbar ist,
wobei insbesondere der Stator (414) ein Statorgehäuse (416) umfasst, das den Rotor (413) wenigstens teilweise umschließt und das über einen Schaft (412) im Mischbehälter (40) stationär gehalten wird,
wobei das Statorgehäuse (416) besonders bevorzugt eine allgemein zylinderförmige Gestalt aufweist und auf einer Oberseite, die quer zur Drehachse (S2) orientiert ist, wenigstens eine Einlassöffnung (418), um Flüssigkeit und Inhaltsstoffe, die in dem Mischbehälter enthalten sind, aufzunehmen, und auf einer Umfangsseitenfläche (416S) wenigstens eine Auslassöffnung (417) umfasst, um Flüssigkeit in den Mischbehälter auszugeben.

5. Vorrichtung nach Anspruch 4, **dadurch gekennzeichnet, dass** der Rotor (413) eine Anzahl von Flügelenden (Winglets) (415) umfasst, die sich von der Drehachse (S2) des Rotors (413) radial erstrecken.

6. Vorrichtung nach einem der vorhergehenden Ansprüche, **dadurch gekennzeichnet, dass** die Flüssigkeitszuführungsvorrichtung als Wasserbehälter (2) geformt ist;
wobei der Wasserbehälter (2) vorzugsweise mit einem Wassereinlass (201) zum Zuführen von Wasser zu dem Wasserbehälter (2) verbunden ist;
wobei der Wassereinlass (201) insbesondere mit dem Wasserbehälter (2) über eine Wasserbehandlungseinheit (20) verbunden ist.

7. Vorrichtung nach Anspruch 6, **dadurch gekennzeichnet, dass** der Wassereinlass (201) über eine Filtrationseinheit (21) mit dem Wasserbehälter (2) verbunden ist.

8. Vorrichtung nach Anspruch 7, **dadurch gekennzeichnet, dass** die Filtrationseinheit (21) eine Mikrosiebmembran (211) mit einer durchschnittlichen Porengröße (P) von 0,1 bis 0,4 µm, vorzugsweise 0,2 bis 0,3 µm umfasst.

9. Vorrichtung nach einem der vorhergehenden Ansprüche, **dadurch gekennzeichnet, dass** die Inhaltsstoffzuführungsvorrichtung (3) wenigstens einen Pulverbehälter (30, 30A-30D), der einen als Pulver bereitgestellten Inhaltsstoff enthält, und/oder wenigstens einen Mikrokapselbehälter (30, 30A-30D), der einen in Form von Mikrokapseln bereitgestellten Inhaltsstoff enthält, und/oder einen Flüssigkeitsbehälter (30, 30A-30D), der einen Inhaltsstoff in flüssiger Form enthält, umfasst, die jeweils mit einem Zuführungsmechanismus (31, 31A-31D) für den Transport des Inhaltsstoffs zu dem Mischbehälter (40) der Mischvorrichtung (4) verbunden sind;
wobei der Zuführungsmechanismus (31, 31A-31D) vorzugsweise eine drehbare Schraube (311) umfasst, die mit einem Antrieb (310) zum Antreiben der Schraube (311) verbunden ist;
wobei der Zuführungsmechanismus (31, 31A-31D) insbesondere ein drehbares Zahnrad (34) umfasst, das in den zugehörigen Pulverbehälter (30, 30A-30D) oder Mikrokapselbehälter (30, 30A-30D) reicht und so in die Schraube (311) eingreift, dass sich das Zahnrad (34) in dem zugehörigen Pulverbehälter (30, 30A-30D) oder Mikrokapselbehälter (30, 30A-30D) während der Drehung der Schraube (311) dreht.

10. Vorrichtung nach einem der vorhergehenden Ansprüche, wobei ein Pulver, das den wenigstens einen Inhaltsstoff enthält, von der Inhaltsstoffzuführungsvorrichtung zugeführt wird, wobei das Pulver eine Partikelgrößenverteilung im Bereich von 10 µm-3000 µm aufweist und vorzugsweise wenigstens Proteine, Kohlenhydrate und Mineralien umfasst,
wobei das Pulver vorzugsweise wenigstens 10 Gewichts-% Protein umfasst.

11. Verfahren zur Herstellung einer Flüssigkeitszusammensetzung zur vollständigen oder ergänzenden enteralen Ernährung, während dem
- eine Flüssigkeit und wenigstens ein Inhaltsstoff einer Mischvorrichtung (4) zugeführt werden und
- die Mischvorrichtung (4) die Flüssigkeit und den wenigstens einen Inhaltsstoff vermischt, wobei die Mischvorrichtung (4) einen Mischer (41) und einen Mischbehälter (40) umfasst, in dem die Flüssigkeit und der wenigstens eine Inhaltsstoff vom Mischer (41) vermischt werden,
**dadurch gekennzeichnet, dass**
während des Mischens der Flüssigkeit und des wenigstens einen Inhaltsstoffs der herzustellenden Flüssigkeitszusammensetzung der Mischbehälter (40) im Verhältnis zum Mischer (41) bewegt wird, wobei in einem ersten Schritt eine erste Menge der Flüssigkeit und eine erste Menge des wenigstens einen Inhaltsstoffs der Mischvorrichtung (4) zugeführt und von dieser gemischt werden, und in einem zweiten Schritt eine zusätzliche Menge an Flüssigkeit und/oder eine zusätzliche Menge des wenigstens einen Inhaltsstoffs der Mischvorrichtung (4) zugeführt und von dieser gemischt werden, und
wobei im ersten Schritt ein linearer Mischmodus durchgeführt wird und im zweiten Schritt ein chaotischer Mischmodus durchgeführt wird, und
wobei die Flüssigkeitszusammensetzung zur enteralen Ernährung eine Energiedichte von 1,0-5,5 kcal/ml aufweist.

12. Verfahren nach Anspruch 11, wobei der lineare Mischmodus nur den Mischer betätigt und wobei der chaotische Mischmodus den Mischer betätigt und den Behälter im Verhältnis zum Mischer bewegt.

## Revendications

1. Dispositif (1) de préparation d'une composition fluide pour une nutrition entérale complète ou supplémentaire, comprenant:
- un dispositif de fourniture de liquide (2),
- un dispositif de fourniture d'ingrédient (3), et
- un dispositif de mélange (4) pour mélanger un liquide fourni par le dispositif de fourniture de liquide (2) et au moins un ingrédient fourni par le dispositif de fourniture d'ingrédient (3), le dispositif de mélange (4) comprenant un mélangeur (41) et un récipient de mélange (40) dans lequel le liquide et ledit au moins un ingrédient sont mélangés par le mélangeur (41),
dans lequel le dispositif (1) est actionnable pour déplacer le récipient de mélange (40) par rapport au mélangeur (41) pendant le mélange du liquide et dudit au moins un ingrédient de la composition fluide à préparer,
dans lequel le dispositif (1) est conçu et agencé de manière à exécuter au moins un premier et un deuxième modes de mélange, dans lequel, dans le premier mode de mélange, seul le mélangeur (41) est actionné et, dans le deuxième mode de mélange, le mélangeur (41) est actionné et en outre le récipient de mélange (40) est déplacé par rapport au mélangeur (41), et
**caractérisé en ce que** le dispositif est conçu et agencé de manière à exécuter le premier mode de mélange afin de fournir des compositions fluides de nutrition entérale jusqu'à une première densité d'énergie, et le deuxième mode de mélange afin de fournir des compositions fluides de nutrition entérale présentant une deuxième densité d'énergie, dans lequel la deuxième densité d'énergie est plus élevée que la première densité d'énergie.

2. Dispositif selon la revendication 1, dans lequel le dispositif (1) est apte à exécuter un premier programme de mélange afin de fournir des premières compositions fluides de nutrition entérale jusqu'à une première densité d'énergie, et un deuxième programme de mélange afin de fournir des deuxièmes compositions fluides de nutrition entérale présentant une deuxième densité d'énergie,
dans lequel le premier programme de mélange comprend les phases suivantes:
- actionner le dispositif de fourniture de liquide (2) afin d'introduire une première quantité prédéterminée du liquide dans le récipient de mélange (40) ;
- actionner le dispositif de fourniture d'ingrédient (3) afin d'introduire une première quantité prédéterminée de l'ingrédient dans le récipient de mélange (40); et
- mélanger les premières quantités prédéterminées d'ingrédient et de liquide en exécutant le premier mode de mélange afin d'obtenir une première composition fluide de nutrition entérale présentant une première densité d'énergie;
dans lequel le deuxième programme de mélange comprend les phases suivantes:
- exécuter le premier programme de mélange;
- actionner le dispositif de fourniture de liquide (2) afin d'introduire une deuxième quantité prédéterminée du liquide dans le récipient de mélange (40) ;
- actionner le dispositif de fourniture d'ingrédient (3) afin d'introduire une deuxième quantité prédéterminée de l'ingrédient dans le récipient de mélange (40); et
- mélanger les deuxièmes quantités prédéterminées d'ingrédient et de liquide et la première composition fluide de nutrition entérale en exécutant le deuxième mode de mélange;
**caractérisé en outre en ce que** les quantités respectives d'ingrédient et de liquide sont prédéterminées de telle sorte que la première densité d'énergie soit plus faible que la deuxième densité d'énergie.

3. Dispositif selon l'une quelconque des revendications précédentes, comprenant en outre une unité de commande, dans lequel l'unité de commande déclenche le(s) mode(s) de mélange et/ou le(s) programme(s) de mélange des revendications précédentes; de préférence
l'unité de commande est programmable et le dispositif (1) comprend un dispositif de réception de support de stockage pour recevoir un support de stockage amovible; mieux encore
le support de stockage amovible comprend un code logiciel exécutable pour programmer l'unité de commande à exécuter le mode(s) de mélange et/ou le(s) programme(s) de mélange des revendications précédentes.

4. Dispositif selon l'une quelconque des revendications précédentes, **caractérisé en ce que** le mélangeur (41) comprend un rotor (413) qui est rotatif autour d'un axe de rotation (S2), dans lequel le dispositif (1) est actionnable pour déplacer le récipient de mélange (40) par rapport au rotor (413) afin d'exécuter un mouvement (M) le long d'une direction de déplacement parallèle à l'axe de rotation (S2); de préférence
le mélangeur (41) comprend un stator (414) par rapport auquel le rotor (413) est rotatif; mieux encore
le stator (414) comprend un boîtier de stator (416) qui entoure au moins partiellement le rotor (413) et qui, par l'intermédiaire d'un arbre (412), est maintenu stationnaire dans le récipient de mélange (40); et idéalement
le boîtier de stator (416) présente une forme essentiellement cylindrique et comporte sur une face supérieure orientée transversalement à l'axe de rotation (S2) au moins une ouverture d'entrée (418) pour laisser entrer le liquide et les ingrédients contenus dans le récipient de mélange, et sur une face latérale circonférentielle (416S) au moins une ouverture de sortie (417) pour faire sortir le fluide dans le récipient de mélange.

5. Dispositif selon la revendication 4, **caractérisé en ce que** le rotor (413) comprend un nombre d'ailettes (415) s'étendant radialement à partir de l'axe de rotation (S2) du rotor (413).

6. Dispositif selon l'une quelconque des revendications précédentes, **caractérisé en ce que** le dispositif de fourniture de liquide est constitué comme un réservoir d'eau (2); de préférence
le réservoir d'eau (2) est connecté à une entrée d'eau (201) pour amener de l'eau au réservoir d'eau (2); mieux encore
l'entrée d'eau (201) est connectée au réservoir d'eau (2) par l'intermédiaire d'une unité de traitement de l'eau (20).

7. Dispositif selon la revendication 6, **caractérisé en ce que** l'entrée d'eau (201) est connectée au réservoir d'eau (2) par l'intermédiaire d'une unité de filtration (21).

8. Dispositif selon la revendication 7, **caractérisé en ce que** l'unité de filtration (21) comprend une membrane de micro-tamis (211) qui présente une taille de pore moyenne (P) comprise entre 0,1 µm et 0,4 µm, de préférence entre 0,2 µm et 0,3 µm.

9. Dispositif selon l'une quelconque des revendications précédentes, **caractérisé en ce que** le dispositif de fourniture d'ingrédient (3) comprend au moins un réservoir de poudre (30, 30A-30D) pour contenir un ingrédient prévu sous la forme d'une poudre, et/ou au moins un réservoir de microcapsules (30, 30A-30D) pour contenir un ingrédient prévu sous la forme de microcapsules, et/ou au moins un réservoir de liquide (30, 30A-30D) pour contenir un ingrédient sous une forme liquide, chacun étant connecté à un mécanisme d'alimentation (31, 31A-31D) pour transporter l'ingrédient jusqu'au récipient de mélange (40) du dispositif de mélange (4); de préférence
le mécanisme d'alimentation (31, 31A-31D) comprend une vis rotative (311) qui est connectée à une commande (310) pour entraîner la vis (311); mieux encore
le mécanisme d'alimentation (31, 31A-31D) comprend une roue dentée rotative (34) qui pénètre dans le réservoir de poudre (30, 30A-30D) ou le réservoir de microcapsules (30, 30A-30D) associé et qui engage la vis (311) de telle sorte que la roue dentée (34) tourne dans le réservoir de poudre (30, 30A-30D) ou le réservoir de microcapsules (30, 30A-30D) associé pendant la rotation de la vis (311).

10. Dispositif selon l'une quelconque des revendications précédentes, dans lequel une poudre contenant ledit au moins un ingrédient est fournie à partir du dispositif de fourniture d'ingrédient, dans lequel la poudre présente une distribution de taille de particule comprise entre 10 µm et 3000 µm, et comprend de préférence au moins des protéines, des hydrates de carbone et des minéraux; de préférence
la poudre comprend au moins 10 % en poids de protéines.

11. Procédé de préparation d'une composition fluide pour une nutrition entérale complète ou supplémentaire, pendant lequel:
- un liquide et au moins un ingrédient sont amenés à un dispositif de mélange (4); et
- le dispositif de mélange (4) mélange le liquide et ledit au moins un ingrédient, le dispositif de mélange (4) comprenant un mélangeur (41) et un récipient de mélange (40) dans lequel le liquide et ledit au moins un ingrédient sont mélangés par le mélangeur (41),
**caractérisé en ce que**, pendant le mélange du liquide et dudit au moins un ingrédient de la composition fluide à préparer, le récipient de mélange (40) est déplacé par rapport au mélangeur (41), dans lequel
dans une première étape, une première quantité du liquide et une première quantité dudit au moins un ingrédient sont introduites dans et mélangées par le dispositif de mélange (4) et, dans une deuxième étape, une quantité additionnelle de liquide et/ou une quantité additionnelle dudit au moins un ingrédient sont introduites dans et mélangées par le dispositif de mélange (4), et
dans lequel la première étape comprend l'exécution d'un mode de mélange linéaire, et la deuxième étape comprend l'exécution d'un mode de mélange chaotique, et
dans lequel la composition fluide pour une nutrition entérale présente une densité d'énergie comprise entre 1,0 kcal/ml et 5,5 kcal/ml.

12. Procédé selon la revendication 11, dans lequel le mode de mélange linéaire actionne uniquement le mélangeur, et dans lequel le mode de mélange chaotique actionne le mélangeur et déplace le récipient par rapport au mélangeur.
